Europäisches Patentamt

European Patent Office

Office européen des brevets

(11) Publication number: **0 117 331**
A2

(12) # EUROPEAN PATENT APPLICATION

(21) Application number: **83303275.8**

(22) Date of filing: **07.06.83**

(51) Int. Cl.³: **C 21 C 5/46, F 16 L 57/00**

(30) Priority: **13.01.83 JP 2896/83**

(43) Date of publication of application: **05.09.84**
**Bulletin 84/36**

(84) Designated Contracting States: **AT BE DE FR GB IT LU NL SE**

(71) Applicant: **AIKOH CO. LTD., 1-39, Ikenohata 2-chome Taito-ku, Tokyo (JP)**

(72) Inventor: **Takashima, Masaru, 4-12-15, Takanawa, Minato-ku Tokyo (JP)**

(74) Representative: **Bird, Vivian John et al, PAGE & CO. Temple Gate House, Temple Gate Bristol, BS1 6PL (GB)**

(54) **Lance pipe.**

(57) A lance pipe having an unshaped refractory coating layer, characterized in that said coating layer is in contact with a steel pipe applied with a knurling.

-1-

## LANCE PIPE

This invention relates to an improved lance pipe which is used for blasting oxygen into molten steel, raising temperature of the melt and/or pre-treating the melt in steel making furnace, ladle and tundish, or which is used for working such as melting down of non-molten materials in the melting process of steel and as cutting of steel scraps.

As steel lance pipes which are used for the oxygen blasting into molten steel, the raising of temperature of the melt, and/or the pre-treating of the melt or which are used for working such as the melting-down of non-molten materials, which is incidentally carried out in the melting period, and as the cutting of steel scraps there have been conventionally used one which is covered with refractories at the outer surface of the steel pipe to decrease the wear caused by the melt loss when in use, one which is covered with metal wire and/or refractory fiber with stud to reinforce the pipe thereby preventing the release of the refractory coating, and a so-called calorized one in which the surface of steel pipe is provided with an oxidation resistant aluminium-impregnated layer.

However, a considerable number of equipments and steps are needed for carrying out above working and treatments, and even in simple refractory coating treatment there is such a disadvantage that to avoid the release of the coated layer the steel pipe is covered with refractory after it is welded with a reinforcing stud as described above, and further the content of the refractory composition itself is made complicated.

The present invention provides a lance pipe which have settled the above hard points and prevents the refractory layer from releasing with a very simplified treatment. That is, the lance pipe according to the invention is characterized in that it is provided with a refractory coating layer which is in contact with a steel pipe provided with a knurling.

The "knurling" referred to herein is defined in JIS BO 106 to mean "to make knurling nicks with a knurling tool" and it belongs to a rolled working. Further, the knurling nicks made to the steel pipe can be optionally taken whether reticulate or stripe-patterned, according to the shape of the working surface of the die called knurling tool, but to sufficiently achieve the object of the invention an intersecting reticulate form of said knurling nicks is more preferable than a stripe pattern in which the knurling nicks are restricted in one direction. Furthermore, said working is extremely easy and suitable for mass production.

Then the advantageous characteristic of knurling is that metal chips accompanied by the working are not produced since the knurling belongs to a rolled working i.e. a plastic working field. Accordingly the mass of the steel pipe is not decreased after working so that the strength possessed

-3-

by the steel pipe as base material is not impaired at all thereby presenting a great merit when such steel pipe is used as a lance pipe. It is conventionally well known to make streaks on the working surface by cutting so as to avoid a release of unshaped refractory, but it is disadvantageous because a separate consideration must be given to make up for the deterioration of the material, which may be caused by the decrease of mass due to the generation of chips.

In carrying out the present invention the unshaped refractory coating layer can be applied to any refractory composition usually used for lance pipe. In addition, it is possible to handle similarly, as unshaped refractory coating layer, even ceramic layer, cermet layer or one which forms a flame spray coating layer.

Thus it is capable of handling said layers similarly as unshaped refractory coating layers being in contact with steel pipe applied with knurling.

According to the lance pipe worked with an unshaped refractory coating layer being in contact with the steel pipe applied with knurling, an increase of the surface area in the contact surface stabilizes the contact at room temperature, and at the same time the difference between the expansion and the contraction, which occur between the steel pipe and the coating layer, being accompanied by temperature rising and cooling in operation, is dispersed

-4-

not to cause a release.

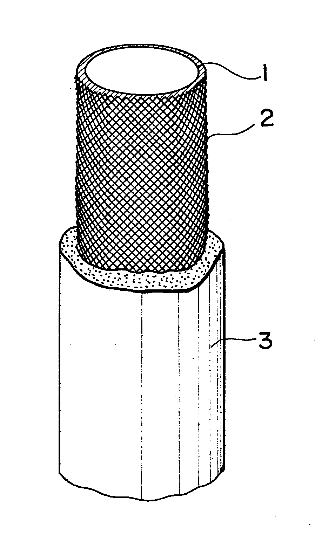

The accompanying drawing is a perspective view showing an Example of the invention.

A JIS 15A steel pipe 1 of 5.5 m long applied with knurling nicks 2 of reticulation having 0.4 mm depth and 0.8 mm pitch was coated at its surface with an unshaped cermet refractory 3 consisting of 50% by weight of Fe, 45% by weight of $Al_2O_3$ and 5% by weight of $ZrSiO_4$, added with 40% by weight of water glass. Said lance pipe was used for blasting oxygen into molten carbon steel in a 5 ton arc furnace under the conditions of oxygen pressures in the range 4~6 $kg/cm^2$ and melt temperatures in the range 1,620~1,630°C, but during the period of cooling the lance pipe to room temperature in the atmosphere after the oxygen blasting any release of the coated layer was not noticed. On the other hand, a lance pipe using a steel pipe without knurling was subject to a comparative test under the same conditions caused a release of the coating before it was cooled to room temperature so that it needed repair for re-use. Further, it took only 40 seconds per lance pipe for the knurling whereby the knurling working was very easy.

0117331.

-5-

<u>Claim</u>:

1.  A lance pipe having an unshaped refractory coating
layer, characterized in that said coating layer is in
contact with a steel pipe applied with a knurling.

1/7